# EUROPÄISCHE PATENTSCHRIFT

(11) **EP 1 825 229 B1**
(45) Veröffentlichungstag und Bekanntmachung des Hinweises auf die Patenterteilung: **08.02.2017**
(21) Anmeldenummer: 05850256.8
(22) Anmeldetag: 13.12.2005
(51) Int. Cl.: G01F 1/84, G01F 1/80

(54) **VORRICHTUNG ZUM MESSEN EINES MASSESTROMES**
DEVICE FOR MEASUREMENT OF A MASS FLOW
DISPOSITIF DE MESURE D'UN FLUX MASSIQUE

(30) Priorität: 14.12.2004 DE 102004060045
(43) Veröffentlichungstag der Anmeldung: 29.08.2007
(73) Patentinhaber: Schenck Process Europe GmbH, 64293 Darmstadt (DE)
(72) Erfinder: KAHLE, Jens, 63303 Dreieich (DE)
(86) Internationale Anmeldenummer: PCT/EP2005/013324
(87) Internationale Veröffentlichungsnummer: WO 2006/063774

(56) Entgegenhaltungen:
- EP-A- 0 474 121
- DE-A1- 3 346 145
- DE-A1- 3 507 993
- DE-B3- 10 253 078
- DE-U1- 20 115 010
- US-A- 3 350 936

## Beschreibung

Die Erfindung betrifft eine Vorrichtung zur Messung eines Schüttgutstromes, gemäß dem Oberbegriff des Patentanspruchs 1.

Zur kontinuierlichen Ermittlung der Durchsatzmenge von Masseströmen, vorzugsweise Schüttgüterströmen, werden in der Praxis vor allem Förderbandwaagen, Messschurren, Prallplatten oder Messvorrichtungen nach dem Coriolis-Prinzip eingesetzt. Insbesondere zur hochgenauen Messung von Schüttgütern, wie Granulaten, gut fließenden Pulvern, Getreide und ähnlichen, werden vorzugsweise Massendurchflussmessgeräte eingesetzt, die nach dem Coriolis-Prinzip arbeiten. Dabei nutzen diese Massedurchflussmessgeräte die Coriolis-Kraft zur Bestimmung der Förderstärke, die beim Transport von Schüttgutteilchen über ein rotierendes Flügelrad auftreten. Dabei besitzt das Flügelrad sternförmig angeordnete Leitschaufeln, durch die das Schüttgut, des mit konstanter Winkelgeschwindigkeit rotierenden Rades nach außen beschleunigt wird. Die Coriolis-Beschleunigung, die bei der Bewegung der Schüttgutteilchen auftritt, hat ein Moment auf das Messrad zur Folge, das dem Massedurchfluss proportional ist. Dieses Messverfahren ist demzufolge geeignet, Schüttgutströme mit hoher Genauigkeit zu erfassen, da im Unterschied zu Prallplatten- und Messschurrensystemen keine von den Schüttguteigenschaften beeinflusste physikalische Größe in die Empfindlichkeit des Gerätes eingeht. Allerdings besteht bei den Coriolis-Messgeräten das Problem, dass die durch den Massestrom erzeugten Coriolis-Kräfte gegenüber den Radialbeschleunigungskräften und daraus resultierenden Störkräften sehr gering sind, so dass die Genauigkeit stark von der Entkopplung der Stör- und Reibungskräfte im Messstrang abhängig ist.

Eine bekannte Messvorrichtung zur Ermittlung des Massedurchflusses von Schüttgütern nach dem Coriolis-Prinzip ist aus der DE 33 46 145 C2 bekannt. Diese Messvorrichtung besitzt ein Flügelrad mit radial angeordneten Leitschaufeln, die auf einem horizontalen Teller angeordnet sind. Das Flügelrad ist mit einer Antriebswelle verbunden, die von einem Motor mit konstanter Drehzahl angetrieben wird. Der Motor ist in zwei Kugellagern drehbar gelagert und stützt sich auf einen Kraftaufnehmer ab, der das Antriebsmoment erfasst. Dieses ist im Prinzip proportional zum Massestrom und kann in einer Auswertevorrichtung als Förderstärke oder als Fördermenge angezeigt werden. In diesem drehbar angeordneten Messstrang aus Kraftmessvorrichtung, drehbar gelagertem Antriebsmotor und angetriebenem Flügelrad treten aber in den Kugellagern Reibungskräfte auf, die in dem Messwert enthalten sind und diesen insbesondere bei sich ändernden Reibungswerten zu Messungenauigkeiten führen können. Die hohen aufzunehmenden Axialkräfte in der Messlagerung erhöhen zudem die Reibung in den Lagern.

Aus der EP 0 474 121 B1 ist eine weitere Massendurchflussmessvorrichtung nach dem Coriolis-Prinzip bekannt, die zur Verringerung der Reibungskräfte im Antriebsstrang ein Messgetriebe besitzt. Dazu ist die Antriebswelle des Flügelrades durch eine stationäre Hülse zum Messgetriebegehäuse geführt. Im Messgetriebegehäuse ist an der Antriebswelle ein Antriebsstirnrad angebracht, das in Eingriff mit einem Zwischenstirnrad und einem Treibstirnrad steht, das an der Antriebswelle des Motors angebracht ist. Das Zwischenstirnrad ist tangential beweglich aufgehängt und mit einer Kraftmessvorrichtung verbunden, die die Tangentialkräfte erfasst, die proportional dem Massedurchfluss sind. Zur Vermeidung der Reibungskräfte im Messstrang ist die Antriebswelle unterhalb des Antriebsstirnrades in einem Wälzlager befestigt, dessen Innenring mit der Antriebswelle und dessen Außenring mit dem Innenring eines zweiten Wälzlagers verbunden ist. Dabei wird der Außenring des ersten Wälzlagers über zusätzliche Stirnräder separat angetrieben, wobei eine Antriebsdrehzahl vorgeschlagen wird, die mindestens der Antriebsdrehzahl der Antriebswelle entspricht. Dadurch wird aber lediglich die Reibungskraft des ersten Wälzlagers im Messstrang kompensiert, wobei die mit hoher Drehzahl in der Hülse umlaufende Antriebswelle noch zusätzliche Lagerreibungen verursachen dürfte. In der Praxis wird diese Lagerreibung in der Hülse zum Schüttgutgehäuseteil durch eine aus der DE 35 07 993 C2 bekannte Luftlagerung gering gehalten, die aber einen sehr hohen Fertigungsaufwand und einen separaten Druckluftanschluss erfordert. Allerdings sind auch bei derartigen Luftlagerungen Reibungseinflüsse nicht ausgeschlossen, insbesondere wenn es bei stark schwankenden Massestromänderungen oder ungleichmäßiger Beladung des Flügelrades zu einseitigen Radialbeschleunigungen kommt, durch die das Flügelrad eine Unwucht erfährt, wobei die Antriebswelle die Lagerhülse berühren kann. Weiterhin können auch Druckschwankungen im Schüttgutbehälter zum Eindringen von stark abrasiven Schüttgutstäuben in den Lagerbereich führen, durch den Reibungsänderungen im Messpfad auftreten.

Aus der DE 102 53 078 B3 ist eine Coriolis-Meßvorrichtung zur Erfassung von Schüttgutströmen bekannt, die ein Flügelrad enthält, das mit einer Antriebswelle verbunden ist und mit konstanter Drehzahl von einem Elektromotor angetrieben wird. Das Flügelrad lenkt einen axial beaufschlagten Massestrom in radiale Richtung um und erteilt diesem eine radiale und tangentiale Geschwindigkeitskomponente. Die Antriebswelle ist von einer Lagerhülse umgeben, in der sie drehbar gelagert ist. Dabei ragt die Lagerhülse bis in den Gehäuseraum des Flügelrades und wird von einem separaten Stirnrad mit einer Drehzahl angetrieben, die der Drehzahl der Antriebswelle entspricht. Die Lagerhülse ist in einem stationären Antriebsgehäuseteil drehbar gelagert, so dass zwischen der Antriebswelle und der Lagerhülse im Grunde keine Relativgeschwindigkeit auftritt. Die Antriebswelle und die Lagerhülse enden antriebsseitig in einem geschlossenen stationären Getriebegehäuseteil, wobei die Antriebswelle mit einem Antriebsstirnrad verbunden ist, welches mit einem Zwischenstirnrad in Eingriff steht und das von einem Treibstirnrad angetrieben wird. Das Zwischenstirnrad ist auf einem Kraftübertragungsarm gelagert, der von einer Kraftmessvorrichtung in seiner radialen Lage gehalten wird. Da im Antriebsstrang allerdings noch das Zwischenstirnrad in Kugellagern auf dem Kraftübertragungsarm und dieser über ein weiteres Kugellager am Getriebegehäuseteil drehbar gelagert ist, treten im Messzweig noch reibungsbehaftete Lagerstellen auf, die zu Messfehlern führen können. Da diese Reibungswerte insbesondere temperaturabhängig sind, können derartige Einflüsse nicht immer vollständig durch Kalibriermaßnahmen kompensiert werden.

US3350936 und DE201150104 offenbaren auch ähnliche Vorrichtungen zur Ermittlung eines Massenstromes nach dem Coriolis-Prinzip.

Der Erfindung liegt deshalb die Aufgabe zugrunde, die Messgenauigkeit einer Massestrommessvorrichtung nach dem Coriolis-Messprinzip zu verbessern und dies unter einfachster mechanischer Ausgestaltung.

Diese Aufgabe wird durch die im Patentanspruch 1 angegebene Erfindung gelöst. Weiterbildungen und vorteilhafte Ausführungsbeispiele der Erfindung sind in den abhängigen Ansprüchen angegeben.

Die Erfindung hat den Vorteil, dass durch die Anordnung der Kraftmessvorrichtung zwischen der das Flügelrad tragenden Antriebswelle und der sich drehenden Lagerhülse das Antriebsdrehmoment zur Ermittlung der Coriolis-Kraft nahezu reibungsfrei erfolgen kann, da sich die Antriebswelle in der Lagerhülse im Grunde nicht dreht, wodurch weitgehend die reibungsbehafteten Messfehler nicht auftreten können. Dadurch ist gleichzeitig ein aufwändiges Messgetriebe entbehrlich, das bisher für einen eigenständigen Antrieb sowohl der Lagerhülse als auch der Antriebswelle notwendig war. Gleichzeitig wird die Messlagerung vorteilhafterweise mit nur geringen Axialkräften beaufschlagt, was sich wiederum reibungsmindernd auswirkt.

Die Erfindung hat weiterhin den Vorteil, dass durch die unmittelbare Anordnung der Kraftmessvorrichtung im Innenraum der Lagerhülse diese platzsparend angebracht ist, wodurch insbesondere die Bauhöhe erheblich verringert werden konnte. Durch die Erfassung des Antriebsdrehmoments zwischen der Lagerhülse und der Antriebswelle ist auch vorteilhafterweise der Einsatz von rotationssymmetrischen Drehmomentaufnehmern möglich, die auch bei mehrphasigen ungleichmäßigen Schüttgutströmen Unwuchtwirkungen oder Querauslenkungen der Antriebswelle kompensieren. Bei einer entsprechend Anordnung der Lagerung wird zusätzlich noch die Übertragung von axialen oder radialen Störkräften auf den Drehmomentaufnehmer verhindert. Durch die Integration der Kraftmessvorrichtung in die Lagerhülse war wegen Wegfalls des großvolumigen Messgetriebes auch ein verhältnismäßig schmales Antriebsgehäuseteil möglich, an dem der radial umgelenkte Massestrom seitlich vorbeifließen kann, so dass die Ein- und Austrittsöffnungen erfindungsgemäß axial übereinander angeordnet werden konnten, was den Einbau in ein notwendiges Förderrohrsystem erleichtert.

Durch die seitlich parallele Anordnung des Antriebsmotors ist insbesondere bei einer Messvorrichtung für große Förderstärken nur eine verhältnismäßig geringe Bauhöhe notwendig, wodurch vorteilhafterweise auch Nachrüstungen in vorhandene Rohrsysteme mit kurzen geradlinigen Baulängen möglich sind oder Räume mit geringen Bauhöhen ausreichen.

Eine besondere Ausführung der Erfindung, bei der die Messsignalübertragung mit einer Telemetrieeinrichtung erfolgt, hat den Vorteil, dass auch bei rotierenden Lagerhülsen herkömmliche störungsbehaftete Schleifringverbindungen durch eine einfache drahtlose Signalübertragung ersetzt werden konnte. Dabei hat insbesondere eine induktive Ankopplung den Vorteil, dass dadurch gleichzeitig auch die Speiseenergie zu den mit Dehnungsmessstreifen bestückten Kraft- bzw. Drehmomentaufnehmern übertragbar ist.

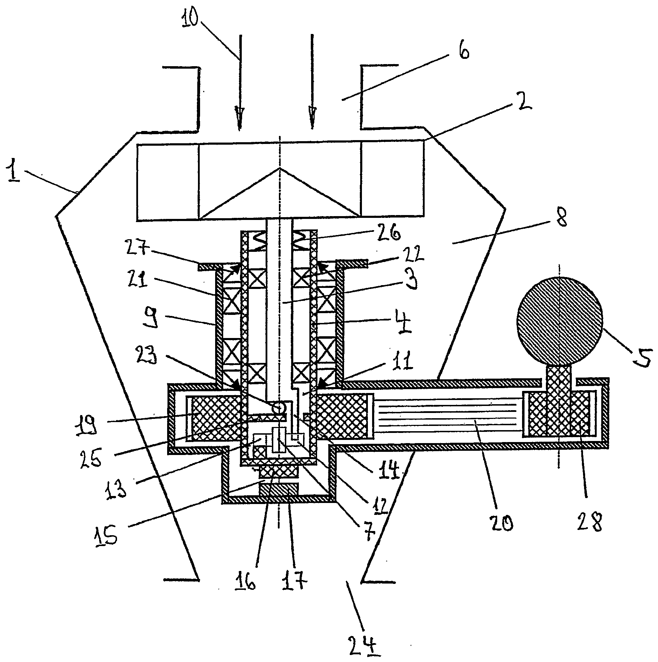

Die Erfindung wird anhand eines Ausführungsbeispiels, das in der Zeichnung dargestellt ist, näher erläutert.

In der Zeichnung ist eine Messvorrichtung zur Erfassung von Schüttgutströmen nach dem Coriolis-Prinzip schematisch als Schnittbild dargestellt, die im wesentlichen aus einem Gehäuseteil 1, in dem ein Flügelrad 2 rotiert, und einer darunter angeordneten Antriebs- und Messvorrichtung besteht, dessen Antriebswelle 3 durch eine angetriebene Lagerhülse 4 in das Flügelradgehäuseteil 1 ragt, und das die Lagerhülse 4 drehbar in einem stationären Antriebsgehäuseteil 9 gelagert ist, wobei innerhalb der Lagerhülse 4 zwischen dieser und der Antriebswelle 3 eine Kraftmessvorrichtung 7 angeordnet ist.

Im Messbetrieb gelangt der Schüttgutstrom 10 als Massestrom durch eine Eintrittsöffnung 6 axial auf das Flügelrad 2, das aus einem horizontal angeordneten Teller mit radialen Leitblechen besteht und durch das das axial auftreffende Schüttgut 10 radial nach außen umgelenkt wird. Durch das mit konstanter Drehzahl umlaufende Flügelrad 2 wird der Schüttgutstrom 10 radial nach außen beschleunigt, wodurch aufgrund der Coriolis-Kraft ein Bremsmoment erzeugt wird, das dem Massestrom 10 proportional ist. Zum staubdichten Messbetrieb ist das Flügelrad 2 in einem umschlossenen Flügelradgehäuseteil 1 untergebracht, das im unteren Bereich eine Austrittsöffnung 24 besitzt, durch die das erfasste Schüttgut 10 einem nachfolgenden Prozess zuführbar ist.

Das Flügelrad 2 ist rotationssymmetrisch ausgebildet und besitzt eine zentrale Antriebswelle 3, die vertikal angeordnet ist und an ihrem unteren Ende einen Mitnahmezapfen 14 als Antriebsmittel aufweist, der mit der Kraftmessvorrichtung 7 in Eingriff steht. Die Antriebswelle 3 ist koaxial von der Lagerhülse 4 umgeben, die vom Flügelradgehäuseraum 8 bis in das darunter liegende Antriebsgehäuseteil 9 verläuft. Die Lagerhülse 4 ist im wesentlichen rohrförmig ausgebildet und erstreckt sich in axialer Länge über die Antriebswelle 3 hinweg und ist an seiner unteren Querschnittsfläche zylinderförmig verschlossen. Die Antriebswelle 3 ist in der Lagerhülse 4 durch zwei axial beabstandete Wälzlager 22 als Radiallager drehbar gelagert. An der unteren horizontalen Endfläche der Antriebswelle 3 stützt sich diese axial auf ein zentrales Kugellager 23 ab, das auf einem Quersteg 25 in der Lagerhülse 4 aufliegt und dadurch ein weitgehend reibungsfreies Axiallager der Antriebswelle 3 darstellt. Gleichzeitig wird durch die Anordnung der Lager 22 und 23 sichergestellt, dass keinerlei axiale oder radiale Störkräfte auf den Messkörper 7 einwirken können. Da die Antriebswelle 3 zur Lagerhülse 4 nur geringfügig um höchstens 5° drehbar ist, sind sowohl die Lagerreibung der radialen 22 und der axialen Lager 23 zu vernachlässigen. Die Radiallager könnten aber auch als Luftlager ausgebildet sein, um die Lagerreibung zu verbessern. Aus.Kostengründen könnte aber auch eine Gleitlagerung vorgesehen werden, die insbesondere bei Messvorrichtungen mit geringeren Masseströmen ausreicht. Soweit es der Platzbedarf zulässt, könnte die Antriebswelle 3 auch reibungsfrei durch ein sogenanntes Kreuzfederelement entsprechend der DE 103 30 947.0 radial gelagert sein.

Zum Flügelradgehäuseraum 8 ist die Antriebswelle 3 mit einer Lagerabdichtung 26 gegen eindringendes Schüttgut geschützt. Da sich die Antriebswelle 3 gegenüber der Lagerhülse 4 nur geringfügig verdreht, kann hier eine dauerhafte dichte Verbindung gewählt werden. Vorzugsweise werden hier eng anliegende Gummidichtungen eingesetzt, die lediglich in Drehrichtung elastisch sein müssen. Bei einer vereinfachten Ausführung ist es auch denkbar, sowohl zur Schüttgutabdichtung als auch zur Radiallagerung die Antriebswelle 3 durch ein Elastomer an der Innenfläche der Lagerhülse 4 zu befestigen, wobei lediglich eine möglichst reibungsfreie Elastizität in Drehrichtung gewährleistet sein muss.

Die Lagerhülse 4 ihrerseits ist ebenfalls drehbar in dem stationären Antriebsgehäuseteil 9 durch zwei Wälzlager 21 radial und axial gelagert und zum Flügelradgehäuseraum 8 mittels eines Dichtelements 27 staubdicht abgedichtet. Das Dichtelement 27 kann auch im Wälzlager 21 integriert sein oder als 0-Ringdichtung ausgebildet werden. Da weder das Wälzlager 21 noch das Dichtelement 27 mit der vermessenen Antriebswelle 3 in Berührung kommt, sind dessen Reibungswerte messtechnisch unbeachtlich, so dass diese vorteilhaft so bemessen sein können, dass sie hauptsächlich eine hervorragende Steifigkeit im Falle der Lagerung bzw. Abdichtwirkung im Falle des Dichtelements auch gegenüber abrasiven Schüttgutstäuben aufweisen.

Im unteren Antriebsgehäuseteil 9 ist zum gemeinsamen Antrieb der Antriebswelle 3 und der Lagerhülse 4 ein Zahn- oder Riemenrad 19 als Lagerhülsenantriebsrad vorgesehen. Dies ist ringförmig um den unteren Teil der Lagerhülse 4 angeordnet und mit dieser fest verbunden. Seitlich neben dem Lagerhülsenantriebsrad 19 ist im unteren Antriebsgehäuseteil 9 der Antriebsmotor 5 mit einem auf seiner Antriebswelle liegendem Antriebsrad 28 befestigt, das vorzugsweise über einen Zahnriemen 20 mit dem Lagerhülsenantriebsrad 19 verbunden ist. Dieser Motorantrieb kann aber auch durch einen Ketten-, Flachriemen-, Keilriemen- oder Zahnradantrieb erfolgen. Dieser parallel zur Lagerhülse 4 angeordnete Antriebsmotor 5 gestattet vorteilhafterweise einen horizontalen Antrieb, durch den eine geringe Bauhöhe erreichbar ist. Es ist aber auch denkbar, den Antriebsmotor 5 direkt unter der Lagerhülse 4 anzuordnen und über eine feste Kupplung mit dieser zu verbinden. Allerdings gestattet die seitliche Anordnung ein Gehäuse 1, bei dem die Eintritts- 6 und Austrittsöffnungen 24 axial übereinander liegen und somit vorteilhaft in einem gradlinigen vertikalen Förderrohrteil integrierbar sind. Als Antriebsmotor 5 ist ein Elektromotor vorgesehen, der vorzugsweise als einfacher Asynchronmotor ausgebildet ist.

Im unteren Teil der Lagerhülse 4 ist die Kraftmessvorrichtung 7 angeordnet, die mit dem Mitnahmezapfen 14 im Eingriff steht. Die Kraftmessvorrichtung 7 ist als Kraftaufnehmer oder als Wägezelle ausgebildet und überträgt die Antriebskraft von der angetriebenen Lagerhülse 4 auf die Antriebswelle 3 und ist dadurch unmittelbar zwischen diesen angeordnet. Im Ausführungsbeispiel ist ein Doppelbiegebalkenaufnehmer als Kraftmessvorrichtung 7 vorgesehen, der aber auch durch eine rotationssymmetrische Wägezelle oder einen Drehmomentaufnehmer ersetzt werden könnte. Als Drehmomentaufnehmer werden dazu vorzugsweise rotationssymmetrische Drehmomentaufnehmer mit speichenartigen Verformungskörpern eingesetzt, an denen Dehnungsmessstreifen angeordnet sind, die koaxial zur Antriebswelle 3 oder in dessen Verlängerung zwischen dieser und der Lagerhülse 4 befestigt werden können. Da der eingesetzte Doppelbiegebalken 7 als Dehnungsmessstreifenaufnehmer ausgebildet ist, wird das dem Massestrom proportionale Bremsmoment durch eine geringfügige tangentiale Auslenkung des Doppelbiegebalkens erfasst, wobei Messwege an der Wägezelle von 0,1 bis 0,5 mm üblich sind. Dadurch läuft die Antriebswelle 3 weitgehend synchron mit der Hülsendrehzahl um, wobei zwischen beiden maximal ein Drehwinkel von 5° möglich ist. Dabei ist die Kraftmessvorrichtung 7 vorzugsweise symmetrisch zur gemeinsamen Drehachse von Antriebswelle 3 und Lagerhülse angeordnet, wobei der Mitnahmezapfen 14 sich pendelnd auf den Doppelbiegebalken abstützt.

Die Antriebswelle 3 könnte auch unten aus der Lagerhülse 4 durch eine Bohrung herausgeführt werden, wobei die Kraftmessvorrichtung 7 dann in einem separaten Hülsenteil mit vergrößertem Innendurchmesser als mit dieser verbundenen Hohlkörper untergebracht sein könnte.

Unterhalb der Kraftmessvorrichtung 7 ist noch eine Telemetrievorrichtung 15 vorgesehen, über die die Messsignale vom Kraftaufnehmer 7 berührungslos zu einer Auswertevorrichtung übertragen werden. Dazu ist der Kraftaufnehmer 7 mit einer induktiven Sendevorrichtung 16 verbunden, durch die die Messsignale induktiv auf eine gegenüberliegend angeordnete induktive Empfangsvorrichtung 17 übertragen werden. Gleichzeitig dient die induktive Empfangsvorrichtung 17 zur Übertragung der Speisespannung auf die Sendevorrichtung 16, die zur Speisung der Dehnungsmessstreifen in dem Doppelbiegebalken dient. Die empfangenen Messsignale können dann über eine galvanische Verbindung oder auch eine drahtlose Sendestrecke an eine nicht dargestellte Auswertevorrichtung übertragen werden, die die Messsignale auswertet und anzeigt oder weiterverarbeitet. Die Übertragung der Messsignale wird vorzugsweise mittels eines Trägerfrequenzwechselstromes oder auch durch Infrarotübertragung vorgenommen.

Das stationäre Antriebsgehäuseteil 9 ist im wesentlichen zylinderförmig ausgebildet und in dem stationären Flügelradgehäuseteil 1 eingebaut, wobei das Motorgehäuseteil seitlich aus dem Flügelradgehäuseteil 1 herausgeführt ist und ein Teil des Antriebsgehäuseteils 9 darstellt. Das Flügelradgehäuseteil 1 enthält an seiner oberen Seite die Eintrittsöffnung 6, die vorzugsweise einen Anschlussflansch enthält, der mit einem Förderrohr verschraubbar ist. In Durchflussrichtung ist das Flügelradgehäuse 1 kegelförmig ausgebildet und dabei soweit vom Antriebsgehäuseteil 9 beabstandet, dass das durchströmende Schüttgut vertikal von der Eintrittsöffnung 6 zur axial darunter liegenden Austrittsöffnung 24 gefördert wird, die ebenfalls mit einem Förderrohr verbindbar ist. Vorteilhafterweise sind dadurch Messgerätehöhen ab 250 mm möglich, mit denen schon Fördermengen von 20 t pro Stunde gemessen werden können. Mit Bauhöhen ab 900 mm können bereits Ausführungen bis 600 t pro Stunde realisiert werden.

Die Funktion der Messvorrichtung wird anhand der Zeichnung näher beschrieben. Im Leerlaufbetrieb, wenn kein Schüttgut auf das Flügelrad 2 geleitet wird, muss durch die Lagerhülse 4 lediglich ein Antriebsmoment bzw. Bremsmoment aufgebracht werden, das der Reibung im Messstrang entspricht. Da durch die synchron mit der Antriebswelle 3 umlaufende Lagerhülse 4 keine Reibung in diesem Teil des Antriebsstrangs entsteht, sind lediglich die Lagerreibungen, die durch Erschütterungen oder geringe Drehzahlschwankungen auftreten, von der Lagerhülse 4 aufzubringen. Die in diesem Teil entstehenden Reibungen sind verhältnismäßig gering, da sich die Antriebswelle 3 durch derartige Kräfte nur sehr gering in der Lagerhülse 4 bewegt und durch die Wälzlagerung 22 auch kaum Reibungen auftreten. Ein entsprechendes Leerlaufdrehmoment wird deshalb im Grunde nur durch Luftturbulenzen am Flügelrad 2 erzeugt, das durch eine Tarierung der Messvorrichtung kompensiert wird, so dass sich durch die nahezu reibungsfreie Antriebswellenlagerung 22 eine hohe Nullpunktkonstanz ergibt.

Wird nun ein Schüttgutstrom 10 axial auf das Flügelrad 2 aufgegeben, entsteht durch die Umlenkung eine radiale Beschleunigung des Schüttgutstroms 10, durch den eine Coriolis-Kraft an der Antriebswelle 3 ein zusätzliches Bremsmoment erzeugt, das dem Massestrom direkt proportional ist. Dadurch wird die mit der Antriebswelle 3 in Eingriff stehende Kraftmessvorrichtung 7 tangential maximal 0,1 bis 0,5 mm ausgelenkt und überträgt dieses Bremsmoment von der Antriebswelle 3 auf den Doppelbiegebalkenaufnehmer 7. Die durch den Doppelbiegebalkenaufnehmer 7 erfasste Kraft stellt somit einen Wert für den über das Flügelrad 2 laufenden Masse- oder Schüttgutstrom 10 dar. Über die bekannten geometrischen Abmessungen des Flügelrades 2 sowie die Hebelarmlängen am Doppelbiegebalkenaufnehmer 7 ist mit Hilfe einer nicht dargestellten Auswertevorrichtung die Förderstärke oder Fördermenge des über das Flügelrad 2 laufenden Massestromes ermittel- und anzeigbar.

Theoretisch ergibt sich bei konstanter Antriebsdrehzahl des Flügelrades 2, dass das erforderliche Antriebsdrehmoment zwischen dem Flügelrad 2 und dessen Antrieb genau dem Massendurchsatz proportional ist. Dies wird allerdings in der Praxis noch von zusätzlichen Bremsmomenten beeinflusst, die durch Reibungseinflüsse im Messstrang entstehen. Dieses Problem wird durch die erfinderische Maßnahme dadurch gelöst, dass im Messstrang bei der Antriebswellenlagerung beim Übergang zum Flügelradgehäuseraum 8 alle Reibungseinflüsse gänzlich ausgeschaltet werde. Dies wird dadurch erreicht, dass unmittelbar zwischen der Antriebswelle 3 und der Lagerhülse 4 die Kraftmessvorrichtung 7 vorgesehen ist, durch die nahezu keine Relativbewegung zwischen der Antriebswelle 3 und der Lagerhülse 4 entsteht, so dass die Antriebswelle 3 in ihrer gesamten Länge bis zur Kraftmessvorrichtung 7 reibungsfrei gelagert ist. Dabei kommt es insbesondere auch nicht auf die Art dieser drehbaren Radiallagerung 22 zwischen der Antriebswelle 3 und der Lagerhülse 4 an, so dass auch einfache Lagerungen vorgesehen werden können. Hingegen verlegt die Erfindung die Reibungseinflüsse in den Bereich zwischen den Außenmantel der Lagerhülse 4 und den stationären Antriebsgehäuseteil 9. Dadurch wird im Grunde die Antriebswelle 3 bis in den Flügelradgehäuseraum 8 von Reibungseinflüssen entkoppelt, weil die reibungsbehaftete Axial- und Radiallagerung 21 der Hülse 4 nicht im Messstrang bis zur Kraftmessvorrichtung 7 angeordnet ist. Es ist daher nahezu ausgeschlossen, dass Reibungseinflüsse an der Lagerabdichtung 26 und dort eventuell eintretende Schüttgutstäube die Messgenauigkeit beeinflussen können. Deshalb sind auch in diesem Bereich vorkommende Temperaturschwankungen beim Schüttgut für die Messgenauigkeit im Grunde unbeachtlich, da hierdurch zwar die Lagerreibung zwischen der Lagerhülse 4 und dem Antriebsgehäuseteil 9 schwankt, dies aber nicht das erfassbare Antriebsmoment beeinflusst, das auf den Doppelbiegebalkenaufnehmer 7 im Messstrang wirkt. Deshalb können vorteilhafterweise an der Lagerung 21 zwischen der Lagerhülse 4 und dem Antriebsgehäuseteil 9 auch reibungsbehaftete Dichtelemente 27 vorgesehen werden, die eine dauerhafte Abdichtung bei Schüttgütern mit stark abrasiven Staubanteilen gewährleisten.

Insbesondere wird durch die erfindungsgemäße reibungsfreie Antriebswellenlagerung, die gleichzeitig durch ihre Anordnung gewährleistet, dass keinerlei axiale oder radiale Störkräfte auf den Messkörper einwirken, auch die Messgenauigkeit bei geringen Masseströmen 10 verbessert, da die dann notwendigen relativ hohen Flügelraddrehzahlen auch bei geringeren Schüttgutschwankungen und ungleicher Flügelradbeladung zu relativ starken Unwuchten neigen, die sich hier nicht im Messstrang auswirken können. Des weiteren erlaubt eine derart reibungsfreie Lagerung des Messstrangs einen relativ kleinen Durchmesser des Lagerhülsenantriebsrades 19 im Verhältnis zum Flügelraddurchmesser, durch den eine höhere Messsignalempfindlichkeit zu erzielen ist, da reibungsbedingte Bremsmomentschwankungen im Messstrang minimiert werden. Dadurch ist auch bei kleinen Schüttgutströmen 10 eine hohe Nullpunktkonstanz gewährleistet.

## Patentansprüche

1. Vorrichtung zum Messen eines Schüttgutstromes, nach dem Coriolis-Messprinzip, die ein von einem Motor (5) mit konstanter Drehzahl angetriebenes Flügelrad (2) enthält, auf das der Massestrom (10) aufgebbar und radial umlenkbar und durch eine Kraftmessvorrichtung (7) das Antriebsdrehmoment messbar ist, wobei eine das Flügelrad (2) tragende Antriebswelle (3) in einer Lagerhülse (4) drehbar gelagert und von dieser koaxial umgeben ist und bis in einen Flügelradgehäuseraum (8) ragt, wobei die Lagerhülse (4) in einem stationären Antriebsgehäuseteil (9) drehbar gelagert ist und mit einer Drehzahl angetrieben wird, die der Drehzahl der Antriebswelle (3) entspricht, wobei zwischen der Antriebswelle (3) und der Lagerhülse (4) die Kraftmessvorrichtung (7) angeordnet ist, **dadurch gekennzeichnet, dass** das stationäre Antriebsgehäuseteil (9) axial zylinderformig ausgebildet ist und von einem nach unten kegelförmig verjüngenden Flügelradgehäuse (1) umgeben ist, wobei das Flügelradgehäuse (1) in gerader Durchflussrichtung axial übereinander liegende Ein- (6) und Austrittsöffnungen (24) enthält, wobei der Antriebsmotor (5) parallel seitlich neben dem Antriebsgehäuseteil (9) ausserhalb des Flügelradgehäuses (1) angeordnet ist und dadurch eine flache Bauart aufweist. (4) die Kraftmessvorrichtung (7) angeordnet ist und das stationäre Antriebsgehäuseteil (9) axial zylinderförmig ausgebildet ist und von einem nach unten kegelförmig verjüngenden Flügelradgehäuse (1) umgeben ist, wobei das Flügelradgehäuse (1) in gerader Durchflussrichtung axial übereinander liegende Ein- (6) und Austrittsöffnungen (24) enthält, wobei der Antriebsmotor (5) parallel seitlich neben dem Antriebsgehäuseteil (9) ausserhalb des Flügelradgehäuses (1) angeordnet ist und dadurch eine flache Bauart aufweist.

2. Vorrichtung zum Messen eines Schüttgutstromes nach Anspruch 1, **dadurch gekennzeichnet, dass** die Kraftmessvorrichtung (7) innerhalb der Lagerhülse (4) oder innerhalb eines mit der Lagerhülse (4) verbundenen Hohlkörpers angeordnet ist.

3. Vorrichtung zum Messen eines Schüttgutstromes nach Anspruch 1 oder 2, **dadurch gekennzeichnet, dass** die Kraftmessvorrichtung (7) als Biegebalkenaufnehmer, als rotationssymmetrische Wägezelle oder als Drehmomentaufnehmer ausgebildet ist.

4. Vorrichtung zum Messen eines Schüttgutstromes nach einem der vorhergehenden Ansprüche, **dadurch gekennzeichnet, dass** die Kraftmessvorrichtung (7) so zwischen der Antriebswelle (3) und der Lagerhülse (4) angeordnet ist, dass sie das von der Lagerhülse (4) aufgebrachte Antriebsmoment erfasst.

5. Vorrichtung zum Messen eines Schüttgutstromes nach einem der vorhergehenden Ansprüche, **dadurch gekennzeichnet, dass** die Kraftmessvorrichtung (7) mit ihrem Kraftaufnahmeteil (13) an einem im Innenbereich (11) der Lagerhülse (4) angeordneten Teil befestigt ist und dass sich die Antriebswelle (3) mit einem vom Drehpunkt beabstandeten Antriebsmittel (14) auf den Krafteinleitungsteil (12) abstützt und das Drehmoment zwischen der Lagerhülse (4) und der Antriebswelle (3) erfasst.

6. Vorrichtung zum Messen eines Schüttgutstromes nach einem der vorhergehenden Ansprüche, **dadurch gekennzeichnet, dass** die Kraftmessvorrichtung (7) mit einer Telemetrieeinrichtung (15) verbunden ist, die aus einer an der Lagerhülse (4) angeordneten Sendevorrichtung (16) und einem am stationären Antriebsgehäuseteil (3) angeordneten Empfangsvorrichtung (17) besteht, mittels derer mindestens die erfassten Messsignale übertragbar sind.

7. Vorrichtung zum Messen eines
Schüttgutstromes nach Anspruch 6, **dadurch gekennzeichnet, dass** die Sende- (16) und Empfangsvorrichtung (17) Induktivitäten enthält, die so zueinander angeordnet sind, dass durch deren induktive Kopplung mit Hilfe von Wechselströmen sowohl die Messsignale als auch die Speisespannung für die Kraftmessvorrichtung (7) übertragbar sind.

8. Vorrichtung zum Messen eines
Schüttgutstromes nach einem der vorhergehenden Ansprüche, **dadurch gekennzeichnet, dass** die Lagerhülse (4) über eine Antriebsvorrichtung (19,20,28) mit einem Motor (5) verbunden ist, wobei der Motor (5) seitlich neben oder direkt unter der Lagerhülse (4) angeordnet ist.

9. Vorrichtung zum Messen eines
Schüttgutstromes nach Anspruch 8, **dadurch gekennzeichnet, dass** die Antriebsvorrichtung (19,20,28) ein an der Lagerhülse (4) befestigtes Antriebsrad (19) enthält, das über einen Riemen (20) Ketten oder Zahnradantrieb mit dem seitlich angeordneten Elektromotor (5) verbunden ist, der zum Antrieb des Flügelrades (2) dient.

10. Vorrichtung zum Messen eines Schüttgutstromes nach einem der vorhergehenden Ansprüche, **dadurch gekennzeichnet, dass** in dem stationären Antriebsgehäuseteil (9) die Lagerhülse (4) drehbar angeordnet ist und bis in das Flügelradgehäuse (8) hinein ragt und synchron mit der konstanten Flügelrad Drehzahl umläuft.

11. Vorrichtung zum Messen eines Schüttgutstromes nach Anspruch 10, **dadurch gekennzeichnet, dass** die Lagerhülse (4) durch Lager, insbesondere mittels Kugellager Kegelrollenlager (21), radial und axial im Antriebsgehäuseteil (9) gelagert ist.

12. Vorrichtung zum Messen eines Schüttgutstromes nach einem der vorhergehenden Ansprüche, **dadurch gekennzeichnet, dass** in der Lagerhülse (4) die das Flügelrad (2) tragende Antriebswelle (3) drehbar gelagert ist, wobei die Antriebswelle (3) sich antriebsmässig so auf einer Kraftmessvorrichtung (7) abstützt, dass durch die angetriebene Lagerhülse (4) die Antriebswelle (3) mit der selben Drehzahl umläuft.

13. Vorrichtung zum Messen eines Schüttgutstromes nach Anspruch 11, **dadurch gekennzeichnet, dass** die Antriebswelle (3) durch ein Radiallager (22), insbesondere durch ein Gleit, Kugel-, Luftlager oder ein Kreuzfederelement gegenüber der Lagerhülse (4) gelagert ist.

14. Vorrichtung zum Messen eines Schüttgutstromes nach Anspruch 13, **dadurch gekennzeichnet, dass** die Antriebswelle (3) gegenüber der Lagerhülse (4) durch ein zentrales Axiallager (23) , insbesondere durch ein Kugellager Spitzenlager axial gelagert ist, wodurch keine Axialkräfte auf den Messkörper einwirken können.

15. Vorrichtung zum Messen eines Schüttgutstromes nach einem der vorhergehenden Ansprüche, **dadurch gekennzeichnet, dass** die Kraftmessvorrichtung (7) mit einer Auswertevorrichtung verbunden ist, die aus den erfassten Messsignalen, den geometrischen Abmessungen und anderer physikalischer Parameter die Förderstärke und/oder die Fördermenge des Massestroms errechnet.

## Claims

1. Device for measuring a flow of bulk material in accordance with the Coriolis measuring principle, which device contains an impeller (2) which is driven at constant rotational speed by a motor (5) and onto which the mass flow (10) can be put and can be deflected radially, and the drive torque can be measured by a force measuring device (7), a drive shaft (3) carrying the impeller (2) being rotatably mounted in a bearing sleeve (4) and surrounded coaxially by the latter and projecting into an impeller housing space (8), the bearing sleeve (4) being rotatably mounted in a stationary drive housing part (9) and being driven at a rotational speed which corresponds to the rotational speed of the drive shaft (3), the force measuring device (7) being arranged between the drive shaft (3) and the bearing sleeve (4), **characterized in that** the stationary drive housing part (9) is formed axially cylindrically and is surrounded by an impeller housing (1) that tapers conically toward the bottom, wherein the impeller housing (1) contains inlet (6) and outlet openings (24) located axially one above the other in the straight flow direction, wherein the drive motor (5) is arranged parallel to and laterally beside the drive housing part (9), outside the impeller housing (1), and has a flat design as a result. (4) the force measuring device (7) being arranged and the stationary drive housing part (9) is formed axially cylindrically and is surrounded by an impeller housing (1) that tapers conically toward the bottom, wherein the impeller housing (1) contains inlet (6) and outlet openings (24) located axially one above the other in the straight flow direction, wherein the drive motor (5) is arranged parallel to and laterally beside the drive housing part (9), outside the impeller housing (1), and has a flat design as a result.

2. Device for measuring a flow of bulk material according to Claim 1, **characterized in that** the force measuring device (7) is arranged inside the bearing sleeve (4) or inside a hollow body connected to the bearing sleeve (4).

3. Device for measuring a flow of bulk material according to Claim 1 or 2, **characterized in that** the force measuring device (7) is constructed as a bending beam sensor, as a rotationally symmetrical load cell or as a torque sensor.

4. Device for measuring a flow of bulk material according to one of the preceding claims, **characterized in that** the force measuring device (7) is arranged between the drive shaft (3) and the bearing sleeve (4) such that it measures the drive torque applied by the bearing sleeve (4).

5. Device for measuring a flow of bulk material according to one of the preceding claims, **characterized in that** the force measuring device (7) is secured with its force sensing part (13) to a part arranged in the internal area (11) of the bearing sleeve (4), and **in that** the drive shaft (3) is supported on the force introduction part (12) with a drive means (14) at a distance from the pivot point and measures the torque between the bearing sleeve (4) and the drive shaft (3).

6. Device for measuring a flow of bulk material according to one of the preceding claims, **characterized in that** the force measuring device (7) is connected to a telemetry unit (15), which comprises a transmitting device (16) arranged on the bearing sleeve (4) and a receiving device (17) arranged on the stationary drive housing part (3), by means of which at least the measured signals acquired can be transmitted.

7. Device for measuring a flow of bulk material according to Claim 6, **characterized in that** the transmitting (16) and receiving device (17) contain inductors, which are arranged in relation to one another such that, by means of the inductive coupling and with the aid of alternating currents, both the measured signals and also the feed voltage for the force measuring device (7) can be transmitted.

8. Device for measuring a flow of bulk material according to one of the preceding claims, **characterized in that** the bearing sleeve (4) is connected to a motor (5) via a drive device (19, 20, 28), wherein the motor (5) is arranged laterally beside or directly under the bearing sleeve (4).

9. Device for measuring a flow of bulk material according to Claim 8, **characterized in that** the drive device (19, 20, 28) contains a drive wheel (19) which is secured to the bearing sleeve (4) and which is connected via a belt (20), chains or a gear drive to the laterally arranged electric motor (5) which serves to drive the impeller (2).

10. Device for measuring a flow of bulk material according to one of the preceding claims, **characterized in that** the bearing sleeve (4) is rotatably arranged in the stationary drive housing part (9) and projects into the impeller housing (8) and rotates synchronously at the constant impeller rotational speed.

11. Device for measuring a flow of bulk material according to Claim 10, **characterized in that** the bearing sleeve (4) is mounted radially and axially in the drive housing part (9) by bearings, in particular by means of ball bearings tapered roller bearings (21).

12. Device for measuring a flow of bulk material according to one of the preceding claims, **characterized in that** the drive shaft (3) carrying the impeller (2) is rotatably mounted in the bearing sleeve (4), wherein the drive shaft (3) is supported in drive terms on a force measuring device (7) such that the drive shaft (3) revolves at the same rotational speed as the driven bearing sleeve (4).

13. Device for measuring a flow of bulk material according to Claim 11, **characterized in that** the drive shaft (3) is mounted with respect to the bearing sleeve (4) by a radial bearing (22), in particular by a sliding, spherical, air bearing or a cross-spring element.

14. Device for measuring a flow of bulk material according to Claim 13, **characterized in that** the drive shaft (3) is axially mounted with respect to the bearing sleeve (4) by a central axial bearing (23), in particular by a ball-bearing jewel bearing, as a result of which no axial forces can act on the measuring element.

15. Device for measuring a flow of bulk material according to one of the preceding claims, **characterized in that** the force measuring device (7) is connected to an evaluation device, which calculates the delivery intensity and/or the delivery rate of the mass flow from the acquired measured signals, the geometric dimensions and other physical parameters.

## Revendications

1. Dispositif pour la mesure d'un flux de matière en vrac, selon le principe de mesure de Coriolis, qui contient une roue à aubes (2) entraînée avec une vitesse de rotation constante par un moteur (5), sur laquelle le flux massique (10) peut être déversé et dévié radialement et le couple de rotation d'entraînement peut être mesuré par un dispositif de mesure de force (7), dans lequel un arbre d'entraînement (3) portant la roue à aubes (2) est monté de façon rotative dans un coussinet (4) et est entouré coaxialement par celui-ci et il s'étend jusque dans un espace du boîtier de roue à aubes (8), dans lequel le coussinet (4) est monté de façon rotative dans une partie de carter d'entraînement stationnaire (9) et est entraîné avec une vitesse de rotation, qui correspond à la vitesse de rotation de l'arbre d'entraînement (3), dans lequel le dispositif de mesure de force (7) est disposé entre l'arbre d'entraînement (3) et le coussinet (4), **caractérisé en ce que** la partie de carter d'entraînement stationnaire (9) est réalisée axialement en forme de cylindre et est entourée par un boîtier de roue à aubes (1) se rétrécissant en forme de cône vers le bas, dans lequel le boîtier de roue à aubes (1) comporte des ouvertures d'entrée (6) et de sortie (24) situées axialement l'une au-dessus de l'autre dans la direction d'écoulement droite, dans lequel le moteur d'entraînement (5) est disposé parallèlement latéralement à côté de la partie de carter d'entraînement (9) à l'extérieur du boîtier de roue à aubes (1) et présente de ce fait un mode de construction plat.
(4) le dispositif de mesure de force (7) est diposé et la partie de carter d'entraînement stationnaire (9) est réalisée axialement en forme de cylindre et est entourée par un boîtier de roue à aubes (1) se rétrécissant en forme de cône vers le bas, dans lequel le boîtier de roue à aubes (1) comporte des ouvertures d'entrée (6) et de sortie (24) situées axialement l'une au-dessus de l'autre dans la direction d'écoulement droite, dans lequel le moteur d'entraînement (5) est disposé parallèlement latéralement à côté de la partie de carter d'entraînement (9) à l'extérieur du boîtier de roue à aubes (1) et présente de ce fait un mode de construction plat.

2. Dispositif pour la mesure d'un flux de matière en vrac selon la revendication 1, **caractérisé en ce que** le dispositif de mesure de force (7) est disposé à l'intérieur du coussinet (4) ou à l'intérieur d'un corps creux relié au coussinet (4).

3. Dispositif pour la mesure d'un flux de matière en vrac selon la revendication 1 ou 2, **caractérisé en ce que** le dispositif de mesure de force (7) est réalisé sous la forme d'un enregistreur à poutre flexible, d'une cellule de charge à symétrie de révolution ou d'un enregistreur de couple de rotation.

4. Dispositif pour la mesure d'un flux de matière en vrac selon l'une quelconque des revendications précédentes, **caractérisé en ce que** le dispositif de mesure de force (7) est disposé entre l'arbre d'entraînement (3) et le coussinet (4), de telle manière qu'il détecte le couple d'entraînement appliqué par le coussinet (4).

5. Dispositif pour la mesure d'un flux de matière en vrac selon l'une quelconque des revendications précédentes, **caractérisé en ce que** le dispositif de mesure de force (7) est fixé avec sa partie de reprise de force (13) à une partie disposée dans la région intérieure (11) du coussinet (4) et **en ce que** l'arbre d'entraînement (3) s'appuie par un moyen d'entraînement (14) espacé du centre de rotation sur la partie d'introduction de force (12) et détecte le couple de rotation entre le coussinet (4) et l'arbre d'entraînement (3).

6. Dispositif pour la mesure d'un flux de matière en vrac selon l'une quelconque des revendications précédentes, **caractérisé en ce que** le dispositif de mesure de force (7) est relié à un dispositif de télémétrie (15), qui se compose d'un dispositif d'émission (16) disposé sur le coussinet (4) et d'un dispositif de réception (17) disposé sur la partie de carter d'entraînement stationnaire (3), au moyen desquels au moins les signaux de mesure détectés peuvent être transmis.

7. Dispositif pour la mesure d'un flux de matière en vrac selon la revendication 6, **caractérisé en ce que** le dispositif d'émission (16) et le dispositif de réception (17) contiennent des bobines d'induction, qui sont disposées l'une par rapport à l'autre de telle manière que, par leur couplage inductif à l'aide de courants alternatifs, il soit possible de transmettre aussi bien les signaux de mesure que la tension d'alimentation pour le dispositif de mesure de force (7).

8. Dispositif pour la mesure d'un flux de matière en vrac selon l'une quelconque des revendications précédentes, **caractérisé en ce que** le coussinet (4) est relié à un moteur (5) par un dispositif d'entraînement (19, 20, 28), dans lequel le moteur (5) est disposé latéralement à côté ou directement en dessous du coussinet (4).

9. Dispositif pour la mesure d'un flux de matière en vrac selon la revendication 8, **caractérisé en ce que** le dispositif d'entraînement (19, 20, 28) comprend une roue d'entraînement (19) fixée sur le coussinet (4), qui est reliée par une courroie (20), une chaîne ou un mécanisme à engrenages au moteur électrique (5) disposé latéralement, qui sert pour l'entraînement de la roue à aubes (2).

10. Dispositif pour la mesure d'un flux de matière en vrac selon l'une quelconque des revendications précédentes, **caractérisé en ce que** le coussinet (4) est disposé de façon rotative dans la partie de carter d'entraînement stationnaire (9) et pénètre jusque dans le boîtier de roue à aubes (8) et tourne en synchronisme avec la vitesse de rotation constante de la roue à aubes.

11. Dispositif pour la mesure d'un flux de matière en vrac selon la revendication 10, **caractérisé en ce que** le coussinet (4) est supporté radialement et axialement dans la partie de carter d'entraînement (9) au moyen de paliers, en particulier au moyen de roulements à billes de roulements à rouleaux coniques (21).

12. Dispositif pour la mesure d'un flux de matière en vrac selon l'une quelconque des revendications précédentes, **caractérisé en ce que** l'arbre d'entraînement (3) portant la roue à aubes (2) est monté de façon rotative dans le coussinet (4), dans lequel l'arbre d'entraînement (3) prend appui côté entraînement sur un dispositif de mesure de force (7), de telle manière que l'arbre d'entraînement (3) tourne avec la même vitesse de rotation au moyen du coussinet entraîné (4).

13. Dispositif pour la mesure d'un flux de matière en vrac selon la revendication 11, **caractérisé en ce que** l'arbre d'entraînement (3) est monté par un palier radial (22), en particulier un palier lisse, un roulement à billes ou un palier d'air, ou un élément à ressorts croisés par rapport au coussinet (4).

14. Dispositif pour la mesure d'un flux de matière en vrac selon la revendication 13, **caractérisé en ce que** l'arbre d'entraînement (3) est monté axialement par rapport au coussinet (4) au moyen d'un palier axial central (23), en particulier au moyen d'un roulement à billes un appui à pivot, de sorte qu'aucune force axiale ne puisse agir sur le corps de mesure.

15. Dispositif pour la mesure d'un flux de matière en vrac selon l'une quelconque des revendications précédentes, **caractérisé en ce que** le dispositif de mesure de force (7) est relié à un dispositif d'évaluation, qui calcule à partir des signaux de mesure détectés, des dimensions géométriques et d'autres paramètres physiques, la charge de transport et/ou le débit du flux massique.
